# EUROPÄISCHE PATENTSCHRIFT

(11) **EP 2 705 297 B1**
(45) Veröffentlichungstag und Bekanntmachung des Hinweises auf die Patenterteilung: **25.11.2020**
(21) Anmeldenummer: 10778846.5
(22) Anmeldetag: 08.10.2010
(51) Int. Cl.: B60Q 1/00, F21S 41/14, F21S 41/29, F21S 43/14, F21S 43/50, F21V 7/00

(54) **LEUCHTEINHEIT FÜR FAHRZEUGE**
LIGHTING UNIT FOR VEHICLES
UNITÉ D'ÉCLAIRAGE POUR VÉHICULES

(30) Priorität: 10.10.2009 DE 102009049016
(43) Veröffentlichungstag der Anmeldung: 12.03.2014
(73) Patentinhaber: HELLA GmbH & Co. KGaA, 59552 Lippstadt (DE)
(72) Erfinder: SCHÄFER, Heinrich, 33181 Bad Wünnenberg (DE); SUDAHL, Jörg, 59556 Lippstadt (DE); LARRANAGA ARTEAGA, Rafael, 52950 Atizapan Edo. De Mexico (MX); EHLERT, Stefan, 99817 Eisenach (DE)
(86) Internationale Anmeldenummer: PCT/EP2010/006152
(87) Internationale Veröffentlichungsnummer: WO 2011/042195

(56) Entgegenhaltungen:
- EP-A1- 2 169 296
- EP-A2- 2 194 311
- WO-A1-2006/097067
- US-A1- 2005 270 794

## Beschreibung

Die Erfindung betrifft eine Leuchteinheit für Fahrzeuge nach dem Oberbegriff des Patentanspruchs 1.

Aus der DE 10 2007 034 123 A1 ist eine Leuchteinheit für Fahrzeuge bekannt, die eine mit einer Lichtquelle bestückte Leiterplatte und eine in Lichtabstrahlrichtung vor der Lichtquelle angeordnete Vorsatzoptik aufweist. Die Vorsatzoptik weist zwei Befestigungsdome auf, die jeweils in eine Aussparung eines sich an einer Rückseite der Leiterplatte anschließenden Haltekörpers eingreifen, so dass in einer Montagestellung die Vorsatzoptik durch Vernieten formschlüssig an dem Haltekörper befestigt ist. Hierdurch wird eine präzise Ausrichtung der zusammengefügten Bauteile, wie Vorsatzoptik, Lichtquelle und Leiterplatte gewährleistet. Nachteilig an der bekannten Leuchteinheit ist jedoch, dass die Befestigung erst aufgrund eines weiteren Prozessschrittes nach Einsetzen der Befestigungsdome in die Aussparungen erfolgt.

Aus der US 2005/270794 A1 ist eine Leuchteinheit für Fahrzeuge mit einer auf einer Leiterplatte angeordneten Lichtquelle sowie einer vorgelagerten Vorsatzoptik bekannt. Die Vorsatzoptik weist einen hakenförmigen Befestigungsdom auf, der einen sich an einer Rückseite der Leiterplatte anschließenden Haltekörper hintergreift und somit die Leiterplatte mit der Lichtquelle in einer definierten Relativposition zu der Vorsatzoptik hält. Ein Durchstecken des Befestigungsdoms durch eine Aussparung ist nicht vorgesehen.

Aus der WO 2006/097067 A1 ist eine Leuchteinheit für Fahrzeuge mit einer Lichtquelle und einer Vorsatzoptik bekannt, wobei die Vorsatzoptik Befestigungsdome aufweist, die jeweils in Ausnehmungen eines Haltekörpers eingreifen und durch Presspassung gehalten sind, wobei der Haltekörper auf einer der Lichtquelle abgewandten Rückseite einer die Lichtquelle tragenden Leiterplatte angeordnet ist. Die Aussparung des Haltekörpers weist keine in einem spitzen Winkel zu der Leiterplatte verlaufende Rastnase auf, mittels derer eine Verkrallung mit dem Befestigungsdome ermöglicht würde.

Aufgabe der vorliegenden Erfindung ist es daher, eine Leuchteinheit für Fahrzeuge derart weiterzubilden, dass auf einfache und kostengünstige Weise eine präzise Positionierung bzw. Befestigung von Bauteilen gewährleistet ist.

Zur Lösung der Aufgabe weist die Erfindung die Merkmale des Patentanspruchs 1 auf.

Nach der Erfindung erfolgt die Befestigung der Vorschaltoptik an einem Haltekörper unter Verkrallung einer Mantelfläche des Befestigungsdoms an einer Randkante der Aussparung des Haltekörpers. Vorteilhaft kann hierdurch eine formschlüssige bzw. kraftschlüssige Verbindung zwischen der Vorsatzoptik und dem Haltekörper bereits beim Durchgreifen der Befestigungsdome durch die Aussparung des Haltekörpers erfolgen. Ein nachfolgender Befestigungsschritt ist nicht mehr erforderlich. Vorteilhaft kann somit der Herstellungsaufwand reduziert und die Prozesssicherheit erhöht werden. Nach der Erfindung bildet die Randkante der Aussparung des Haltekörpers ein Ende einer unter einem spitzen Winkel zu einer Erstreckungsebene der Leiterplatte verlaufenden Rastnase, die sich während des Durchgreifens des Befestigungsdoms durch die Aussparung des Haltekörpers verbiegt oder bereits vorgebogen ausgebildet ist. Hierdurch wird auf einfache Weise eine dauerhafte Anpresskraft auf den Befestigungsdom bewirkt.

Nach einer Weiterbildung der Erfindung erstreckt sich die Rastnase in Umfangsrichtung des Doms um einen spitzen oder stumpfen Winkel. Vorteilhaft kann hierdurch die Festigkeit der lösbaren Verbindung zwischen der Vorsatzoptik und dem Haltekörper erhöht werden.

Nach einer Weiterbildung der Erfindung ist die Mantelfläche des Befestigungsdoms uneben ausgebildet, so dass das Verkrallen derselben an der Randkante der Haltekörperaussparung verbessert wird.

Nach einer Weiterbildung der Erfindung weist der Haltekörper auf einer der Leiterplatte abgewandten Seite ein Federelement auf, das sich in der Montagestellung gegen einen Tragrahmen abstützt. Der Tragrahmen ist mit einem Abdeckrahmen verbunden, der die Vorsatzoptik an einer Vorderseite abdeckt. Vorteilhaft ermöglicht das Federelement eine konstante Anpresskraft, mittels derer die Leiterplatte und die Vorsatzoptik gegen den Abdeckrahmen gedrückt wird. Darüber hinaus kann die Vibrations- und Temperaturbelastung verringert werden.

Nach einer Weiterbildung der Erfindung ist das Federelement des Haltekörpers im Querschnitt S-förmig ausgebildet, wobei ein erstes Ende flächig an der Rückseite der Leiterplatte und ein zweites Ende an dem Tragrahmen anliegen. Der Haltekörper weist eine Doppelfunktion auf. Zum einen dient er zur exakten Positionierung der Lichtquelle und der Vorsatzoptik in Bezug auf den Abdeckrahmen infolge der von der mittels des Federelementes des Haltekörpers bewirkten Anpresskraft. Zum anderen ermöglicht der Haltekörper durch den S-förmigen bzw. wendelförmigen Aufbau des Federelementes eine schnelle Abführung der in der Leuchteinheit entstehenden Wärme, so dass er zugleich als Kühlkörper wirkt.

Nach einer Weiterbildung der Erfindung sind der Tragrahmen und der Abdeckrahmen U-förmig ausgebildet, wobei an Enden des Tragrahmens und des Abdeckrahmens Befestigungsmittel zur Befestigung des Abdeckrahmens an dem Tragrahmen vorgesehen sind. Durch das Vorsehen des Abdeckrahmens wird das Erscheinungsbild der Leuchteinheit maßgeblich beeinflusst. Insbesondere werden hierdurch die Leiterplatte, der Haltekörper und der Tragrahmen verblendet. Darüber hinaus kann entlang des Tragrahmens eine Mehrzahl von Lichtquellen und denselben zugeordnete Vorsatzoptiken angeordnet sein, so dass eine linienförmige Lichtfunktion gebildet ist. Beispielsweise kann hierdurch die Taglichtfunktion erzeugt werden, wobei der Tragrahmen eine Leuchteinheit einer anderen Lichtfunktion, beispielsweise Abblendlicht- und/oder Fernlichtfunktion, zumindest teilweise umfasst.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: eine Vorderansicht einer rahmenförmigen Leuchteinheit mit einer Mehrzahl von reihenförmig angeordneten Lichtquellen, die zwischen einem Tragrahmen und einem in Lichtabstrahlrichtung vorderen Abdeckrahmen angeordnet sind,
- Fig. 2: eine Vorderansicht des Tragrahmens, an dem die Mehrzahl von Lichtquelle und die denselben jeweils zugeordneten Vorsatzoptiken montiert sind,
- Fig. 3: eine seitliche Darstellung eines Haltekörpers, der in Lichtabstrahlrichtung hinter der Lichtquelle und der Vorsatzoptik angeordnet ist,
- Fig. 4: eine Rückansicht des Haltekörpers gemäß Figur 3,
- Fig. 5: eine Explosionsdarstellung der Leuchteinheit im Bereich einer Öffnung des Abdeckrahmens im Schnitt und
- Fig. 6: einen Querschnitt im Bereich eines Befestigungsdoms der Vorsatzoptik.

Eine Leuchteinheit für Fahrzeuge, wie sie im vorliegenden Ausführungsbeispiel beschrieben ist, dient beispielsweise zur Erzeugung einer Tagfahrlichtfunktion und ist im Bugbereich eines Kraftfahrzeugs angeordnet. Die Leuchteinheit kann als rahmenförmige Leuchteinheit in einem Scheinwerfer des Fahrzeugs integriert sein, wobei eine mittlere Lichtfunktion zur Erzeugung eines Abblendlicht- und Fernlichtes zumindest teilweise umfasst wird.

Im vorliegenden Ausführungsbeispiel weist die Leuchteinheit einen U-förmigen Tragrahmen 1 auf, der an einem nicht dargestellten Gehäuse des Scheinwerfers befestigt ist. In Lichtabstrahlrichtung 2 der Leuchteinheit vor dem Tragrahmen 1 erstreckt sich eine mit einer Anzahl von Lichtquellen 3 bestückte Leiterplatte 4 sowie einer Anzahl von den Lichtquellen 3 zugeordneten Vorsatzoptiken 5 sowie einer Anzahl von zwischen der Leiterplatte 4 und dem Tragrahmen 1 angeordnete Haltekörper 6. Die als Leuchtdioden ausgebildeten Lichtquellen 3 verlaufen entlang der Form des Tragrahmens 1 in einem vorgegebenen Abstand zueinander, wobei den Lichtquellen 3 jeweils eine Vorsatzoptik 5 und ein Haltekörper 6 zugeordnet sind.

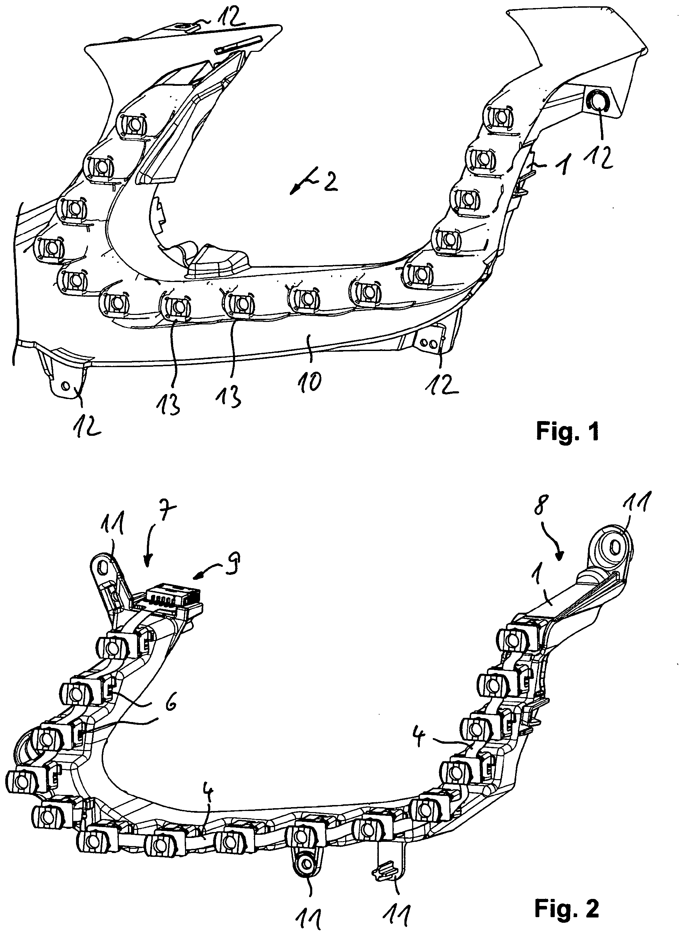

Die Leiterplatte 4 ist als eine flexible Leiterplatte ausgebildet, so dass die Lichtquellen 3 nicht nur in einer gemeinsamen Ebene, sondern auch stufig versetzt im dreidimensionalen Raum angeordnet sein können. Wie aus Figur 2 ersichtlich ist, verläuft die flexible Leiterplatte 4 von einem ersten Ende 7 des Tragrahmens 1 bis zu einem zweiten Ende 8 desselben. An dem ersten Ende 7 des Tragrahmens 1 ist ein Plateau vorgesehen für einen Anschlussabschnitt 9 der Leiterplatte 4, so dass die Lichtquellen 3 über eine nicht dargestellte Steuereinheit ein- und ausgeschaltet werden können.

Sowohl der Tragrahmen 1 als auch ein der Form des Tragrahmens 1 folgender und die von dem Tragrahmen 1 aufnehmenden Bauteile abdeckender Abdeckrahmen 10 weisen Befestigungsmittel 11 bzw. 12 auf, so dass zum einen der Abdeckrahmen 10 fest mit dem Tragrahmen 1 und zum anderen der Tragrahmen 1 und/oder der Abdeckrahmen 10 fest mit dem nicht dargestellten Gehäuse verbunden sind.

Zur präzisen Positionierung der Lichtquelle 3 und der Vorsatzoptik 5 in Relation zu den jeweiligen Öffnungen 13 des Abdeckrahmens 10 einerseits und zur Positionierung der Vorsatzoptik 5 in Relation zur Lichtquelle 3 andererseits weisen die Vorsatzoptiken 5 jeweils zwei gegenüberliegende Befestigungsdome 14 auf, die durch Verkrallung mit dem Haltekörper 6 verbunden sind. Der Haltekörper 6 weist auf einer der Leiterplatte 4 zugewandten Seite eine Aussparung 15 auf, die bereichsweise von einer in einem spitzen oder stumpfen Winkel in Umfangsrichtung begrenzten und in einem spitzen Winkel α von einer Erstreckungsebene E der Leiterplatte 4 abgewinkelten Rastnase 16 umgeben ist, die in der Montagestellung an einem freien Ende derselben mit einer Randkante 17 sich an einer Mantelfläche 18 des Befestigungsdoms 14 verkrallt.

Alternativ können die Rastnasen 16 auch in Umfangsrichtung der Aussparung 15 versetzt zueinander und stegartig ausgebildet sein. Wesentlich ist, dass die Rastnasen 16 mit ihrer Randkante 17 eine Klemmkraft im Wesentlichen radial zu dem Befestigungsdom 14 ausüben, so dass dieser in der Aussparung 15 lagesicher gehalten ist.

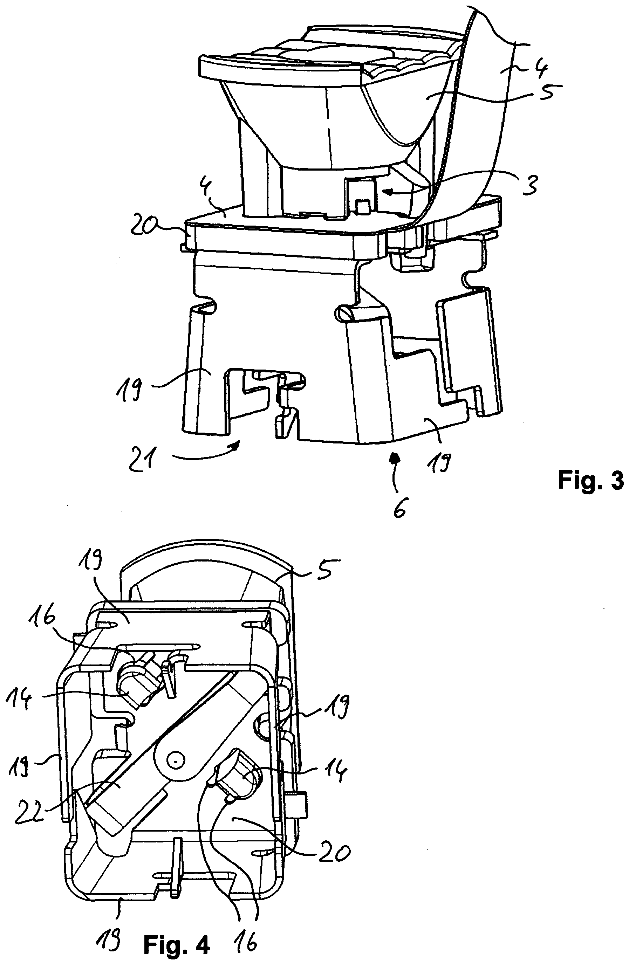

Der Haltekörper 6 ist aus einem Blechmaterial hergestellt, das aus einem Zuschnitt in eine entsprechend der in den Figuren 3 und 4 dargestellten Form umgeformt wird. Der Haltekörper 6 weist somit einen sockelförmigen Aufbau auf mit vier winklig zueinander angeordneten Seitenwandungen 19, einer die Aussparung 15 aufweisenden Deckseite 20 und einer im Wesentlichen offenen Bodenseite 21. Wie insbesondere aus Figur 4 ersichtlich ist, ist die Bodenseite 21 im Wesentlichen offen ausgebildet. Es erstreckt sich im Bereich der Bodenseite 21 lediglich ein aus dem Blechzuschnitt des Haltekörpers 6 teilweise ausgeschnittenes Federelement 22, das in der Montagestellung die Leiterplatte 4 zusammen mit der Lichtquelle 3 und der Vorsatzoptik 5 gegen den Abdeckrahmen 10 presst. In der Montagestellung wird ein Ausleger 23 der Vorsatzoptik 5 gegen eine innere Randfläche 24 der Öffnung 13 des Abdeckrahmens 10 gedrückt. Die Seitenwandungen 19 sind starr ausgebildet und erstrecken sich im Wesentlichen durchgehend zwischen der Leiterplatte 4 einerseits und dem Tragrahmen 1 andererseits.

Die Rastnase 16 kann in die um den Winkel α bezüglich der Deckseite 20 erhabenen Position infolge des Umformvorgangs des Haltekörpers 6 gebildet werden. Alternativ kann die schräge Rastnase 16 auch infolge des Eintauchens des Befestigungsdoms 14 in die Aussparung 15 der Deckseite 20 des Haltekörpers 6 geformt werden. Wesentlich ist, dass eine klemmende Verkrallung zwischen der Rastnase 16 und dem Befestigungsdom 14 erzielt wird. Zum verbesserten Aneinandergreifen von Rastnase 16 und Befestigungsdom 14 ist die Mantelfläche 18 des Befestigungsdoms 14 vorzugsweise uneben ausgebildet. Beispielsweise kann die Mantelfläche 18 Rillen aufweisen, die zumindest in einem Abschnitt der Rastnasen 16 in Umfangsrichtung des Befestigungsdoms 14 umlaufen.

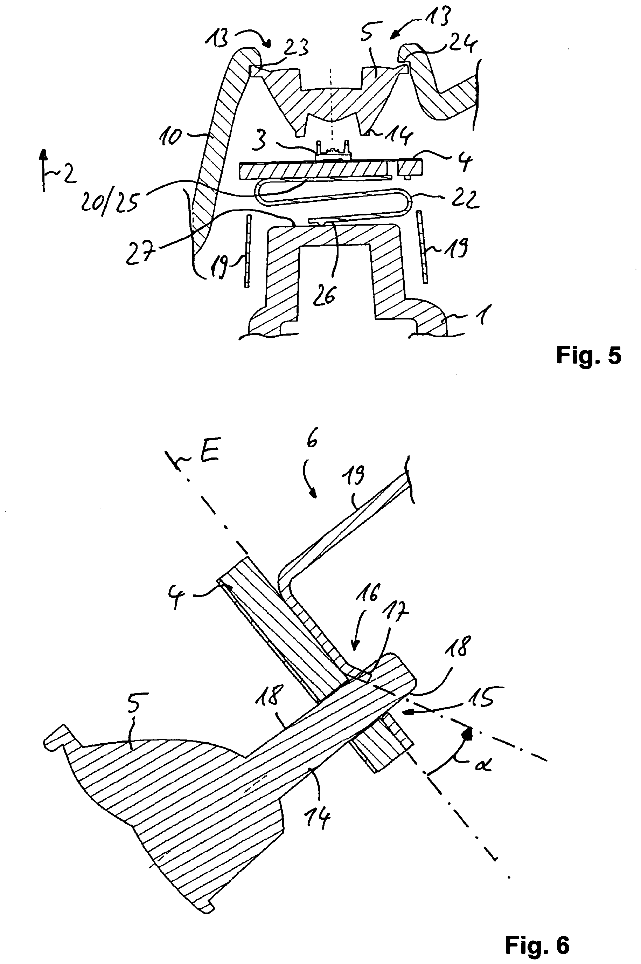

Wie insbesondere aus Figur 5 ersichtlich ist, ist das Federelement 22 im Querschnitt S-förmig ausgebildet, wobei ein der Leiterplatte 4 zugewandtes erstes Ende 25 in die Deckseite 20 des Haltekörpers 6 übergeht und somit flächig an einer Rückseite der Leiterplatte 4 anliegt. Ein gegenüberliegendes zweites Ende 26 liegt punktförmig an einer Abstützfläche 27 des Tragrahmens 1 an. Alternativ kann das zweite Ende 26 auch linienförmig oder flächig an der Abstützfläche 27 anliegen. Durch die flexible Anordnung des Federelementes 22 in Lichtabstrahlrichtung 2 wird im Montagezustand eine ausreichend große Anpresskraft ausgeübt, die die Leiterplatte 4 bzw. die Vorsatzoptik 5 gegen den Abdeckrahmen 10 drückt.

Dadurch, dass der Haltekörper 6 hohlförmig ausgebildet ist, wobei der Hohlraum nur teilweise durch das Federelement 22 ausgefüllt ist, dient der Haltekörper 6 zusätzlich als Kühlkörper, der in der Lage ist, die von der Lichtquelle 3 erzeugte Wärme in den Rückraum abzuführen.

Im vorliegenden Ausführungsbeispiel weist die Leiterplatte 4 eine Mehrzahl von zu den Befestigungsdomen 14 korrespondierende Durchgangsöffnungen auf, durch die die Befestigungsdome 14 mit Spiel einführbar sind. Vorzugsweise weisen die Befestigungsdome 14 einen konstanten Durchmesser in Erstreckungsrichtung derselben auf.

Die Vorsatzoptik 5 ist vorzugsweise als eine Linse ausgebildet.

Zur Montage der Leuchteinheit wird der U-förmige Tragrahmen 1 als Kunststoffteil bereitgestellt. Der aus einem Blechzuschnitt geformte Haltekörper 6 wird auf den Tragrahmen 1 aufgesetzt, wobei die starren Seitenwandungen 19 einen die Abstützfläche 27 aufweisenden Stumpf des Tragrahmens 1 umgeben. Gleichzeitig liegt das zweite Ende 26 des Federelementes 22 an der Abstützfläche 27 des Tragrahmenstumpfes an. Nachfolgend wird die mit den Lichtquellen 3 bestückte Leiterplatte 4 auf die Deckseite 20 des Haltekörpers 6 aufgesetzt, wobei Durchgangsöffnungen der Leiterplatte 4 zu Aussparungen 15 der Deckseite 20 fluchten. Abschließend werden die Vorsatzoptiken 5 unter Eintauchen der Befestigungsdome 14 in die Aussparungen 15 und Verkrallen derselben mit den Haltekörpern 6 einerseits sowie der Abdeckrahmen 10 unter lösbarer Verbindung mit dem Tragrahmen 1 andererseits aufgesetzt, wobei mittels des Federelementes 22 eine definierte Positionierung der Lichtquelle 3 und der Vorsatzoptik 5 im Verhältnis zum Abdeckrahmen 10 gewährleistet ist.

### Bezugszeichenliste

- 1: Tragrahmen
- 2: Lichtabstrahlrichtung
- 3: Lichtquelle
- 4: Leiterplatte
- 5: Vorsatzoptiken
- 6: Haltekörper
- 7: erstes Ende (1)
- 8: zweites Ende (1)
- 9: Anschlussabschnitt
- 10: Abdeckrahmen
- 11: Befestigungsmittel (1)
- 12: Befestigungsmittel (10)
- 13: Öffnungen (10)
- 14: Befestigungsdom
- 15: Aussparung (6)
- 16: Rastnase
- 17: Randkante
- 18: Mantelflächen (14)
- 19: Seitenwandungen
- 20: Deckseite
- 21: Bodenseite
- 22: Federelement
- 23: Ausleger (5)
- 24: innere Randfläche
- 25: erstes Ende
- 26: zweites Ende
- 27: Abstützfläche (1)
- E: Erstreckungsebene
- α: Winkel

## Patentansprüche

1. Leuchteinheit für Fahrzeuge mit einer auf einer Leiterplatte (4) angeordneten Lichtquelle (3) und mit einer in Lichtabstrahlrichtung (2) vor der Lichtquelle (3) angeordneten Vorsatzoptik (5), die auf einer der Leiterplatte (4) zugewandten Seite mindestens einen Befestigungsdom (14) aufweist, mittels dessen die Vorsatzoptik (5) in der Montagestellung unter Eingreifen des Befestigungsdoms (14) in einer Aussparung (15) eines auf einer der Lichtquelle (3) abgewandten Rückseite der Leiterplatte (4) anschließenden Haltekörpers (6) formschlüssig mit demselben verbunden ist, **dadurch gekennzeichnet, dass** in der Montagestellung eine Randkante (17) der Aussparung (15) zumindest teilweise mit einer Mantelfläche (18) des Befestigungsdoms (14) verkrallt ist, wobei sich die in der Mantelfläche (18) des Befestigungsdoms (14) verkrallende Randkante (17) der Aussparung (15) als ein Ende einer unter einem spitzen Winkel (α) zu einer Erstreckungsebene (E) der Leiterplatte (4) verlaufende Rastnase (16) ausgebildet ist.

2. Leuchteinheit nach Anspruch 1, **dadurch gekennzeichnet, dass** die Mantelfläche (18) des Befestigungsdoms (14) zumindest in einem der Rastnase (16) zugeordneten Bereich uneben ausgebildet ist.

3. Leuchteinheit nach Anspruch 1 oder 2, **dadurch gekennzeichnet, dass** der Haltekörper (6) als ein hohlförmiges Halteblech ausgebildet ist mit starren Seitenwandungen (19), die sich von einer gemeinsamen starren Deckseite (20) erheben.

4. Leuchteinheit nach einem der Ansprüche 1 bis 3, **dadurch gekennzeichnet, dass** der Haltekörper (6) auf einer der Leiterplatte (4) abgewandten Seite ein gegen eine Abstützfläche (27) eines Tragrahmens (1) abstützendes Federelement (22) aufweist, so dass die Leiterplatte (4) und die Vorsatzoptik (5) zwischen dem Tragrahmen (1) und einem die Vorsatzoptik (5) aufnehmenden Abdeckrahmen (10) eingespannt sind.

5. Leuchteinheit nach Anspruch 4, **dadurch gekennzeichnet, dass** das Federelement (22) im Querschnitt S-förmig ausgebildet ist, wobei ein der Leiterplatte (4) zugewandtes erstes Ende (25) des Federelements (22) in die starre Deckseite (20) des Haltekörpers (6) übergeht und ein der Leiterplatte (4) abgewandtes zweites Ende (26) des Federelementes (22) quer zur Leiterplatte (4) flexibel ausgebildet ist und an der Abstützfläche (27) des Tragrahmens (1) anliegt.

6. Leuchteinheit nach einem der Ansprüche 4 oder 5, **dadurch gekennzeichnet, dass** der Tragrahmen (1) und der Abdeckrahmen (10) U-förmig ausgebildet sind, wobei an Enden (7, 8) des Tragrahmens (1) und des Abdeckrahmens (10) Befestigungsmittel (11, 12) zur Befestigung derselben miteinander und/oder an einem Gehäuse vorgesehen sind.

7. Leuchteinheit nach einem der Ansprüche 4 bis 6, **dadurch gekennzeichnet, dass** die Leiterplatte (4) als eine flexible Leiterplatte ausgebildet ist, die sich durchgehend zwischen den Enden (7, 8) des Tragrahmens (1) erstreckt.

8. Leuchteinheit nach einem der Ansprüche 4 bis 7, **dadurch gekennzeichnet, dass** der Abdeckrahmen (10) eine Mehrzahl von Öffnungen (13) aufweist, denen jeweils eine Vorsatzoptik (5) und ein Haltekörper (6) zugeordnet sind.

9. Leuchteinheit nach einem der Ansprüche 4 bis 8, **dadurch gekennzeichnet, dass** die Vorsatzoptik (5) seitliche Ausleger (23) aufweist, die in der Montagestellung an inneren Randflächen (24) einer Öffnung des Abdeckrahmens (10) anliegen.

10. Leuchteinheit nach einem der Ansprüche 1 bis 9, **dadurch gekennzeichnet, dass** die Leiterplatte (4) eine Mehrzahl von zu den Befestigungsdomen (14) der Vorsatzoptiken (5) zugeordnete Durchgangsöffnungen aufweist, durch die jeweils ein Befestigungsdom (14) mit Spiel einführbar ist.

11. Leuchteinheit nach einem der Ansprüche 1 bis 10, **dadurch gekennzeichnet, dass** der Befestigungsdom (14) der Vorsatzoptik (5) einen konstanten Durchmesser in Erstreckungsrichtung desselben aufweist.

12. Leuchteinheit nach einem der Ansprüche 1 bis 11, **dadurch gekennzeichnet, dass** sich die Rastnase (16) des Haltekörpers (6) in Umfangsrichtung des Befestigungsdoms (14) um einen spitzen oder stumpfen Winkel erstreckt.

## Claims

1. Lighting unit for vehicles with a light source (3) arranged on a printed circuit board (4) and with an add-on optic (5) arranged in front of the light source (3) in the direction of light radiation (2) that on the side facing towards the printed circuit board (4) features at least one mounting dome (14) by means of which the add-on optic (5) is connected to the same, in a form-locking manner, in the mounted position with the mounting dome engaging (14) in a recess (15) of a retaining body (6) connecting on the reverse of the printed circuit board (4) facing away from the light source (3), **characterized in that**, in the mounted position, a glare edge (17) of the recess (15) is at least partially locked into a shell surface (18) of the mounting dome (14), where the glare edge (17) of the recess (15) locking into the shell surface (18) of the mounting dome (14) takes the form of one end of a catch tab (16) running at an acute angle (α) to an extension level (E) of the printed circuit board (4).

2. Lighting unit in accordance with Claim 1, **characterized in that** the shell surface (18) of the mounting dome (14) is designed to be uneven at least in an area allocated to the catch tab (16).

3. Lighting unit in accordance with Claim 1 or 2, **characterized in that** the retaining body (6) takes the form of a hollow retaining plate with rigid side walls (19) that rise from a shared rigid cover side (20).

4. Lighting unit in accordance with one of Claims 1 through 3, **characterized in that** the retaining body (6) features, on a side facing away from the printed circuit board (4), a spring element (22) supporting a support surface (27) of a carrier frame (1), such that the printed circuit board (4) and the add-on optic (5) are tensioned between the carrier frame (1) and a cover frame (10) holding the add-on optic (5).

5. Lighting unit in accordance with Claim 4, **characterized in that** the spring element (22) is designed as an S when seen in cross-section, where a first end (25) of the spring element (22) facing towards the printed circuit board (4) merges into the rigid cover side (20) of the retaining body (6) and a second end (26) of the spring element (22) facing away from the printed circuit board (4) is designed to be flexible at a right angle to the printed circuit board (4) and makes contact with the support surface (27) of the carrier frame (1).

6. Lighting unit in accordance with one of Claims 4 or 5, **characterized in that** the carrier frame (1) and the cover frame (10) are designed to be U-shaped, where ends (7, 8) of the carrier frame (1) and the cover frame (10) provide for fasteners (11, 12) for fastening the same to each other and/or to a housing.

7. Lighting unit in accordance with one of Claims 4 through 6, **characterized in that** the printed circuit board (4) takes the form of a flexible printed circuit board that extends continuously between the ends (7, 8) of the carrier frame (1).

8. Lighting unit in accordance with one of Claims 4 through 7, **characterized in that** the cover frame (10) features a plurality of openings (13), to each of which an adon optic (5) and a retaining body (6) are allocated.

9. Lighting unit in accordance with one of Claims 4 through 8, **characterized in that** the add-on optic (5) features lateral cantilevers (23) that, when in the mounted position make contact to interior edge surfaces (24) of an opening of the cover frame (10).

10. Lighting unit in accordance with one of Claims 1 through 9, **characterized in that** the printed circuit board (4) features a plurality of openings allocated to the mounting domes (14) of the add-on optics (5), through each of which a mounting dome (14) can be can be introduced with an amount of play.

11. Lighting unit in accordance with one of Claims 1 through 10, **characterized in that** the mounting dome (14) of the add-on optic (5) features a constant diameter in the extension direction of the same.

12. Lighting unit in accordance with one of Claims 1 through 11, **characterized in that** the catch tab (16) of the retaining body (6) extends around an acute or obtuse angle in the axial direction of the mounting dome (14).

## Revendications

1. Unité d'éclairage pour véhicules avec une source de lumière (3) disposée sur un circuit imprimé (4) et avec un embout optique (5) disposé devant la source de lumière (3) dans le sens de sortie de la lumière (2), qui présente au moins un dôme de fixation (14) sur un côté orienté vers le circuit imprimé (4), au moyen duquel l'embout optique (5) est relié, dans la position de montage, par complémentarité de forme à la source de lumière (3) par engagement du dôme de fixation (14) dans un évidement (15) d'un corps de maintien (6) contigu à ce dernier sur la face arrière du circuit imprimé (4) orienté à l'opposé de la source de lumière (3), **caractérisé en ce qu'**en position de montage, un bord marginal (17) de l'évidement (15) est au moins partiellement engagé dans une surface latérale (18) du dôme de fixation (14), le bord marginal (17) de l'évidement (15) engagé dans la surface latérale (18) du dôme de fixation (14) étant formé comme une extrémité d'une clavette (16) s'étendant selon un angle aigu (α) par rapport à un plan d'extension (E) du circuit imprimé (4).

2. Unité d'éclairage selon la revendication 1, **caractérisée en ce que** la surface extérieure (18) du dôme de fixation (14) est formée de manière inégale au moins dans une zone associée à la clavette (16).

3. Unité d'éclairage selon la revendication 1 ou 2, **caractérisée en ce que** le corps de maintien (6) est formé comme une plaque de maintien creuse avec des parois latérales rigides (19) qui s'élèvent à partir d'une face de couverture rigide commune (20).

4. Unité d'éclairage selon l'une des revendications 1 à 3, **caractérisée en ce que** le corps de maintien (6) présente, sur un côté opposé au circuit imprimé (4), un élément élastique (22) qui s'appuie contre une surface d'appui (27) d'un cadre de support (1), de manière à ce que le circuit imprimé (4) et l'embout optique (5) soient serrés entre le cadre de support (1) et un cadre de recouvrement (10) recevant l'embout optique (5).

5. Unité d'éclairage selon la revendication 4, **caractérisée en ce que** l'élément élastique (22) présente une section transversale en forme de S, une première extrémité (25) de l'élément élastique (22) tournée vers le circuit imprimé (4) se prolongeant par la face de recouvrement rigide (20) du corps de maintien (6) et la seconde extrémité (26) de l'élément élastique (22) opposée au circuit imprimé (4) étant flexible perpendiculairement au circuit imprimé (4) et s'appuyant sur la surface d'appui (27) du cadre porteur (1).

6. Unité d'éclairage selon l'une des revendications 4 ou 5, **caractérisée en ce que** le cadre porteur (1) et le cadre de recouvrement (10) sont en forme de U, des moyens de fixation (11, 12) étant prévus aux extrémités (7, 8) du cadre porteur (1) et du cadre de recouvrement (10) pour fixer ces derniers l'un à l'autre et/ou à un boîtier.

7. Unité d'éclairage selon l'une des revendications 4 à 6, **caractérisée en ce que** le circuit imprimé (4) est conçu comme un circuit imprimé flexible qui s'étend de manière continue entre les extrémités (7, 8) du cadre porteur (1).

8. Unité d'éclairage selon l'une des revendications 4 à 7, **caractérisée en ce que** le cadre de recouvrement (10) présente plusieurs ouvertures (13), auxquelles sont respectivement associés un embout optique (5) et un corps de maintien (6).

9. Unité d'éclairage selon l'une des revendications 4 à 8, **caractérisée en ce que** l'embout optique (5) présente des bras latéraux (23) qui, en position de montage, s'appuient contre les bords intérieurs (24) d'une ouverture du cadre de recouvrement (10).

10. Unité d'éclairage selon l'une des revendications 1 à 9, **caractérisée en ce que** le circuit imprimé (4) présente plusieurs ouvertures de passage associées aux dômes de fixation (14) des embouts optiques (5), à travers chacune desquelles un dôme de fixation (14) peut être inséré avec jeu.

11. Unité d'éclairage selon l'une des revendications 1 à 10, **caractérisée en ce que** le dôme de fixation (14) de l'embout optique (5) présente un diamètre constant dans la direction dans laquelle il s'étend.

12. Unité d'éclairage selon l'une des revendications 1 à 11, **caractérisée en ce que** la clavette (16) du corps de maintien (6) s'étend dans la direction circonférentielle du dôme de fixation (14) selon un angle aigu ou obtus.
